# EUROPEAN PATENT SPECIFICATION

(11) **EP 0 981 639 B1**
(45) Date of publication and mention of the grant of the patent: **26.11.2003**
(21) Application number: 97905002.8
(22) Date of filing: 28.02.1997
(51) Int. Cl.: C12P 19/14, C08B 11/02

(54) **METHOD FOR PRODUCING CELLULOSE DERIVATIVES**
VERFAHREN ZUR HERSTELLUNG VON ZELLULOSEDERIVATEN
PROCEDE DE PRODUCTION DE DERIVES DE CELLULOSE

(43) Date of publication of application: 01.03.2000
(73) Proprietor: Novozymes A/S, 2880 Bagsvaerd (DK)
(72) Inventor: NOGUCHI, Yoshitaka, Showa Denko K.K., Chiba-shi, Chiba 267 (JP); KAMACHI, Motoaki, Showa Denko K.K., Chiba-shi, Chiba 267 (JP)
(86) International application number: DK9700089
(87) International publication number: WO98038328

(56) References cited:
- DE-C- 4 440 245

## Description

### INDUSTRIAL FIELD

The present invention relates to a method for producing cellulose derivatives. More specifically, it relates to a method for producing cellulose derivatives from enzymatically-treated cellulose.

### BACKGROUND ART

Cellulose derivatives include cellulose ethers. Cellulose ethers, such as methyl cellulose (MC), ethyl cellulose (EC), hydroxyethyl cellulose (HEC), hydroxypropyl cellulose (HPC) and carboxymethyl cellulose (CMC), are water-soluble or water-suspensible white polymers which are non-caloric, odorless and tasteless. Therefore, such cellulose ethers are widely used in various fields, for example, foods, chemicals, cosmetics, papermaking and fibers, as thickeners, binders, stabilizers, suspending agents etc.

With the recent development of novel uses, there is a demand for cellulose ethers with high-grade properties that are applicable to such novel uses. For example, there is a demand for cellulose ethers giving a reduced amount of microgel. Microgel as referred to herein is cellulose ether in the form of a semi-dissolved gel which is not completely solubilized in solvents because the etherification is incomplete.

To produce cellulose ethers, a method has heretofore been employed in which a lignocellulose, such as wood pulp or linter pulp, is soaked in a strong alkali solution to give an alkali cellulose, and. thereafter the resulting alkali cellulose is treated with a suitable etherifying agent (e.g., methyl chloride, ethyl chloride, ethylene oxide, propylene oxide, monochloroacetic acid).

The cellulose ethers as produced according to this method could not always have satisfactory characteristics for some uses, as the properties are much influenced by the degree of substitution (degree of etherification) and the distribution of substituents. For example, cellulose ethers with a low degree of substitution are poorly soluble in solvents, because of uneven etherification. In addition, these often give a semi-dissolved gel substance which is referred to as a microgel. The gel substance, microgel is not only sensually (visually and tactually) unfavorable but also results in poor filterability of solutions of the cellulose ethers.

Enzymatic treatment of pulp has been studied, using cellulases and xylanases as the enzymes. For example, in 1986, viikari et al. reported in Proceedings of the Symposium on Biotechnology in the Pulp and Paper Industry, 3rd International Conference, a method of enzymatically pre-treating pulp prior to bleaching it to thereby reduce the amounts of the chemicals to be used in the subsequent bleaching step.

EP 382,576 discloses a method of treating CMC with a cellulase to produce CMC hydrolysates. However, this method involves an enzymatic treatment of CMC after the etherification of pulp, so it does not reduce the amount of microgel during the etherification step. Accordingly, if the microgel is to be removed, a large amount of the enzyme must be used, resulting in noticeable reduction in the yield of the intended hydrolysates. On the other hand, if the yield of the hydrolysates is to be increased in this method, the amount of the enzyme to be used therein must be reduced. However, this is problematic in that the enzymatic treatment of the microgel is insufficient, resulting in still leaving a large amount of microgel in the system. In addition, since the viscosity of the hydrolysates obtained in this method is much lowered, as compared with that of the original CMC, the hydrolysates are disadvantageous when used as thickeners or binders.

DE 44 40 245 Cl discloses a method of producing hydroxyalkyl-cellulose ethers by pre-treating cellulose with a cellulase solution, followed by a treatment with epoxyalkane in the presence of a quaternary ammonium base. The cellulase treatment reduced the degree of polymerization. No effect on the filtration rate is reported.

US patent no. 4,923,565 discloses a method for treating a paper pulp with certain enzyme preparations containing cellulases and/or hemicellulases. CA patent application no. 2,154,944 discloses two xylanases derived from *Actinomadura sp*. FC7 and their use for treatment of pine kraft pulp to reduce the amount of lignin, and thereby the chlorine consumption in any subsequent chemical bleaching step. Neither of these patents, however, discloses the use of the enzyme-treated paper pulp to prepare modified cellulose derivatives by etherification.

Given the situation, the object of the present invention is to provide cellulose derivatives with improved filterability while preventing the formation of microgel in the step of producing cellulose derivatives from pulp.

### STATEMENT OF THE INVENTION

We, the present inventors have assiduously studied in order to solve the above-mentioned problems in the prior art, and have found that treating a pulp with a hemicellulase, e.g. a xylanase such as that derived from *Bacillus sp*. SD902, prior to chemical modification by etherification results in excellent cellulose derivatives that could not be obtained by any conventional methods. Specifically, the cellulose derivatives produced by this method have improved filterability and increased water-solubility. In addition, according to this method, the formation of microgel is minimized, and the intramolecular distribution of substituents in the cellulose derivative is made more uniform. On the basis of these findings, we have completed the present invention.

Accordingly, the invention provides a method for producing a cellulose derivative, which comprises
a)treating the pulp with a hemicellulase, and
b)chemically modifying the treated pulp by etherification.

Now, the present invention is described in detail hereinunder.

### DETAILED DESCRIPTION OF THE INVENTION

### Pulp

The pulp to be used in the present invention may be steamed or bleached pulp derived from coniferous trees (softwood), broad-leaved trees (hardwood) or non-wood plants. The non-wood pulp may be pulp produced from liber plants, such as *kozo* (paper mulberry; *Broussonetia kazinoki*), *mitsumata* (*Edgeworthia papyrifera*), Manila hemp, kenaf; or from hard fiber plants, such as straw, sugar cane, bagasse. In addition, cellulose derivatives having a low degree of chemical modification such as etherification, and also regenerated celluloses can also be used as the starting pulp in the present invention.

### Hemicellulase

The hemicellulase used in this invention is preferably an enzyme that hydrolyzes β-1,4-glycoside bonds. One enzyme or a plurality of enzymes may be used. Some preferred types of hemicellulase are xylanase, mannanase and xylo-glucanase.

The xylanase may be a xylanolytic enzyme obtained from any known source of xylanolytic enzymes. Preferably the xylanolytic enzyme may be obtained from microbial sources, in particular from a filamentous fungus or yeast, or from a bacteria.

Preferred xylanolytic enzymes of fungal origin are xylanases derived from a strain of *Aspergillus,* in particular *A. aculeatus, A. awamori, A. nidulans, A. niger, A. kawachii*, or *A. tubigensis, Aureobasidium, Chaetomium*, in particular *C*. *gracile, Cochliobolus*, in particular *C*. *carbonum, Disporotrichum,* in particular *D. dimorphosporum, Humicola*, in particular *H. insolens, Neocallimastix*, in particular *N*. *patriciarum, Orpinomyces, Penicillium*, in particular *P. janthinellum, Thermomyces*, in particular *T. lanuginosus* (syn. *Humicola lanuginosa*), or *Trichoderma*, in particular *T. longibrachiatum*, or *T. reesei*.

Preferred xylanolytic enzymes of bacterial origin are xylanases derived from a strain of *Bacillus*, in particular *B*. pumilus, *B. stearothermophilus*, or *B. subtilis, Cellulomonas fimi*, in particular *C. fimi, Clostridium*, in particular *C*. *thermocellum, Dictyoglomus*, in particular *D. thermophilum, Microtetraspora,* in particular *M. flexuosa, Streptomyces*, in particular *S. olivochromogenes, or Thermomonospora*.

A particularly preferred xylanase is derived from *Bacillus sp.* SD902; it may be produced by cultivation of the strain and recovery of the xylanase as described in EP 720,649. The enzyme is hereinafter referred to as SDX enzyme. *Bacillus sp*. strain SD902 was deposited for the purposes of patenting at the National Institute of Bioscience and Human-Technology, Agency of Industrial Science and Technology, Ministry of International Trade and Industry, 1-3 Higashi 1-chome, Tsukuba-shi, Ibarakiken 305, Japan. It was deposited by Showa Denko K.K. on 25 December 1992 under deposit No. FERM P-13356, was transferred on 22 December 1993 to international deposit FERM BP-4508 under the terms of the Budapest Treaty, and was later assigned to Novo Nordisk A/S.

The mannanase may be obtained from microbial sources, in particular from a filamentous fungus or yeast, or from a bacteria. A preferred mannanase of fungal origin is derived from *Trichoderma*, particularly *T. reesei*. This enzyme may be produced as described in WO 93/24622.

The enzyme to be used herein is not always required to be pure, but any of cell-free supernatants as obtained through centrifugation of cultures of enzyme-producing cells, or crude enzyme extracts as extracted from incubated cells may be used.

The activity of the enzyme for use in the present invention can be determined by quantifying the reducing sugar as formed through the enzymatic reaction with its substrate (e.g., xylan in the case of xylanase), at pH 7 and at 50°C, according to a method of using 3,5-dinitrosalicylic acid. One unit (U) for the enzymatic activity indicates the amount of the enzyme that forms 1 µmol of reducing sugar (e.g., xylose in the case of xylanase) per minute.

### Conditions for enzyme treatment

The conditions for the enzymatic treatment of pulp according to the invention are not particularly limited. The pH, temperature and process time for the treatment may be suitably defined in such a manner that the enzyme being used is kept active within the defined ranges. Typical conditions are: a temperature between 20°C and 90°C, preferably between 40°C and 80°C; process time between 15 minutes and 24 hours, preferably between 30 minutes and 5 hours; and a pH between 3 and 9, preferably between 4 and 8.

The amount of the enzyme to be added to pulp may be from 1 to 1000 U/g (based on pulp dry matter), preferably from 2 to 250 U/g. If the amount of the enzyme added is smaller than 1 U/g, it may be too small to attain the intended enzymatic treatment; an enzyme amount larger than 1000 U/g is not preferred because the pulp yield may be reduced.

The concentration of pulp to be in the system may be any one that ensures satisfactory stirring and mixing of pulp therein, but is preferably in the range 1 - 20 % by weight.

### Chemical modification

The chemical modification that follows the enzymatic treatment in the method of the present invention is etherification, preferably alkyl etherification, hydroxyalkyl etherification or carboxyalkyl etherification, more preferably methyl etherification, ethyl etherification, hydroxyethyl etherification, hydroxypropyl etherification or carboxymethyl etherification.

The method used in the chemical modification of the enzymatically-treated pulp can be any known method. For example, CMC, MC, EC, HEC or HPC may be produced from pulp by two typical methods. One is an aqueous method where an aqueous medium is used as the reaction solvent; and the other is a solvent method where an organic solvent is used.

Examples of aqueous methods for producing CMC are an alkali cellulose method where pulp is soaked in a solution of sodium hydroxide, and powdery sodium monochloroacetate is added thereto while beating and stirring it; and a monochlorine method where pulp is soaked in an aqueous solution of sodium monochloroacetate, and sodium hydroxide is added thereto while beating and stirring it.

Examples of the solvent method are a 6-fold method that uses a mixed solvent of ethanol and benzene; and a 30-fold method that uses an aqueous solution of 2-propanol.

Apart from such chemical modification, enzymatic modification may also be used.

### EXAMPLES

Now, the present invention is described in more detail with reference to the following examples that are based on experiments. However, these examples are not intended to restrict the scope of the invention. In the examples, all percentages indicate % by weight.

### Example 1:

Commercially-available bleached pulp (trade name "ARAUCO") was made into a 5 % slurry with an acetic acid buffer (pH 6), to which was added SDX enzyme in an amount of 50 U/g (relative to pulp dry matter). The pulp slurry was enzymatically treated at 60°C for 3 hours with stirring, and then de-watered by filtration through a Buchner funnel. The enzymatically-treated pulp thus obtained was then carboxymethyl-etherified to give CMC, according to the CM etherification method mentioned below. The characteristics of the CMC thus obtained herein were compared with those of non-enzymatically treated CMC.

Methods for determining the characteristics of CMC samples are mentioned hereinunder.

### CM Etherification of Pulp:

A slurry was prepared by stirring pulp with 30 times by weight of 88 % isopropanol. Relative to the amount of glucose units, 1.8 mole of sodium hydroxide was added to form alkali cellulose, followed by 0.8 mole of monochloroacetic acid, and this was reacted at 70 to 80°C for 2.5 hours. After the reaction, the reaction mixture was filtered through a Buchner funnel and washed with an aqueous solution of 75-80 % methanol. This filtration and washing was repeated several times. Then, the residue was dried to obtain a pure CMC.

### Filtration Rate:

An aqueous solution of 0.5 % CMC sample to be tested was kept at 20°C and applied onto a 200-mesh sieve, whereupon the amount of the filtrate passing through the sieve within 5 minutes was measured using a measuring cylinder.

### Viscosity:

An aqueous solution of 2 % CMC sample to be tested was kept at 20°C and subjected to viscosimetry using a single cylindrical rotational viscosimeter to determine its viscosity.

### Amount of Microgel:

An aqueous solution of 0.5 % CMC sample to be tested was kept at 20°C and applied onto a 200-mesh sieve, whereupon the wet weight of gel remaining on the sieve was measured and represented as % by weight relative to CMC.

| | Enzyme-Treated CMC | CMC |
|---|---|---|
| Filtration Rate (ml/5 min) | 30 | 18 |
| Viscosity (cps) | 1400 | 1260 |
| Amount of Microgel (%) | 4.0 | 20.5 |

### Example 2:

Pulp was enzymatically treated in the same manner as in Example 1, and then modified into CMC according to the alkali cellulose method mentioned below. The characteristics of the CMC thus obtained herein were compared with those of non-enzymatically treated CMC.

### Alkali Cellulose Method:

Pulp was soaked in an aqueous solution of 18 % sodium hydroxide. After one or two hours, this was squeezed to remove the excess sodium hydroxide, thereby obtaining an alkali cellulose of 3 times by weight relative to pulp. The resulting alkali cellulose was transferred into a beater. Powder sodium monochloroacetate in an amount of 1.2 to 2.0 mole per mole of anhydrous glucose unit in the pulp was added while beating and stirring. This was further beaten and stirred further for several hours, while keeping the temperature at 10°C or lower, whereby sodium monochloroacetate fully penetrated into the cellulose structure. After this, the resulting mixture was transferred into a reactor, and kept therein at from 70 to 80°C for about 2 hours, with further stirring, to give CMC. The reaction mixture was filtered and washed several times with an aqueous solution of 75-80 % methanol, and the resulting residue was dried to obtain a pure CMC.

| | Enzyme-Treated CMC | CMC |
|---|---|---|
| Filtration Rate (ml/5 min) | 32 | 25 |
| Viscosity (cps) | 2800 | 2500 |
| Amount of Microgel (%) | 4.5 | 26.1 |

### Example 3:

Commercially-available bleached pulp (trade name "ARAUCO") was made into a 15 % slurry with phosphoric acid buffer (pH 8), to which was added SDX enzyme in an amount of 100 U/g (relative to pulp dry matter). With stirring, the pulp slurry was enzymatically treated at 70°C for 5 hours, and then de-watered by filtration through a Buchner funnel. The enzymatically-treated pulp thus obtained was then methyl-etherified to give methyl cellulose, according to the methyl etherification method mentioned below. As a control, pulp that had not been enzymatically treated was methyl-etherified. Its characteristics were compared with those of the enzymatically-treated methyl cellulose.

### Methyl Etherification Method:

Pulp was soaked in a solution of about 50 % sodium hydroxide, and then squeezed to obtain an alkali cellulose having sodium hydroxide and water in almost the same amount as that of cellulose. To this was added a slight excess of methyl chloride, and this was reacted at 95 to 100°C in an autoclave. After the reaction, the reaction mixture was washed with hot water on a Buchner funnel and then dried to obtain pure methyl cellulose.

| | Enzyme-Treated MC | MC |
|---|---|---|
| Filtration Rate (ml/5 min) | 28 | 20 |
| Viscosity (cps) | 1100 | 980 |

### ADVANTAGES OF THE INVENTION

The method of the present invention produces cellulose derivatives with better filterability than conventional cellulose derivatives, while preventing the formation of microgel. The cellulose derivatives thus obtained in the present invention can be effectively used, for example, as thickeners, stabilizers and suspending agents.

Depending on the enzyme used in the method of the invention, the characteristics, such as those mentioned above, of cellulose derivatives obtained may be improved without lowering their viscosity. Thus, the present invention is especially advantageous in this respect.

## Claims

1. A method for producing a cellulose derivative, which comprises
a)treating the pulp with a hemicellulase, and
b)chemically modifying the treated pulp by etherification.

2. The method of claim 1, wherein the hemicellulase is an enzyme that hydrolyzes β-1,4-glycoside bonds.

3. The method of claim 1, wherein the hemicellulase is selected from xylanase, mannanase, and xylo-glucanase.

4. The method of the preceding claim, wherein the xylanase is obtainable from *Bacillus sp*. SD902 (FERM BP-4508).

5. The method of any of claims 1 to 4, wherein the chemical modification is methyl-etherification, ethyl-etherification, hydroxyethyl-etherification, hydroxypropyl-etherification, or carboxymethyl-etherification.

## Patentansprüche

1. Verfahren zum Herstellen eines Zellulosederivats, welches umfasst
a) Behandeln des Halbstoffs mit einer Hemizellulase, und
b) chemisches Modifizieren des behandelten Halbstoffs durch Etherifizierung.

2. Verfahren nach Anspruch 1, wobei die Hemizellulase ein Enzym ist, das β-1,4-Glycosidbindungen hydrolysiert.

3. Verfahren nach Anspruch 1, wobei die Hemizellulase ausgewählt ist aus Xylanase, Mannanase und Xylo-Glucanase.

4. Verfahren nach dem vorangegangenen Anspruch, wobei die Xylanase aus *Bacillus sp*. SD902 (FERM BP-4508) erhältlich ist.

5. Verfahren nach einem der Ansprüche 1-4, wobei die chemische Modifikation Methyl-Etherifizierung, Ethyl-Etherifizierung, Hydroxyethyl-Etherifizierung, Hydroxypropyl-Etherifizierung oder Carboxymethyl-Etherifizierung ist.

## Revendications

1. Un procédé pour préparer un dérivé de cellulose, qui comprend :
a) le traitement de la pulpe par une hémicellulase, et
b) la modification chimique, par éthérification, de la pulpe traitée.

2. Le procédé de la revendication 1, dans lequel l'hémicellulase est une enzyme qui hydrolyse les liaisons β-1,4-glycoside.

3. Le procédé de la revendication 1, dans lequel l'hémicellulase est choisie parmi la xylanase, la mannanase et la xylo-glucanase.

4. Le procédé de la revendication précédente, où la xylanase peut être obtenue à partir de *Bacillus sp.* SD902 (FERM BP-4508).

5. Le procédé de l'une des revendications 1 à 4, dans lequel la modification chimique est une méthyl-étherification, une éthyl-étherification, une hydroxyéthyl-étherification, une hydroxypropyl-étherification ou une carboxyméthyl-étherification.
